# EUROPEAN PATENT APPLICATION

(11) **EP 0 843 117 A2**
(43) Date of publication of application: **20.05.1998**
(21) Application number: 97203447.4
(22) Date of filing: 06.11.1997
(51) Int. Cl.: F16K 27/02, F16K 1/34

(54) **Radiator valve**

(30) Priority: 14.11.1996 DE 19647026
(71) Applicant: Danfoss A/S, 6430 Nordborg (DK)
(72) Inventor: Jensen, Lars Vig, 8330 Beder (DK); Jensen, Tage, 8680 Ry (DK); Karlsen, Harald, 9000 Aalborg (DK); Markvart, Arne, 8600 Silkeborg (DK); Bjerggaard, Niels, 8370 Hadsten (DK)

(57) **Abstract**

A radiator valve (1) is disclosed, having a housing which comprises two housing parts, namely, a housing body (2) and a housing cover (3), a closing element (6), and a valve seat (8) which co-operates with the closing element (6) and is formed in an insert (9) arranged in the housing.

It is desirable for the manufacture of such a radiator valve to be simplified.

For that purpose the first housing part (3), the insert (9), the closing element (6) and the second housing part (2) form, in that order, a stack. The housing cover (3) closes an opening in the housing body (2) through which the remaining components of the stack are insertable in succession into the housing body (2).

## Description

The invention relates to a radiator valve having a housing, which comprises two housing parts, namely, a housing body and a housing cover, a closing element, and a valve seat, which co-operates with the closing element and is formed in an insert arranged in the housing.

Such a radiator valve is known, for example, from DE 33 08 070 C2. In this instance the insert is in the form of a sleeve in which a carrier for the closing element is arranged. Sleeve and carrier are put together and then inserted together from the outside into a housing bore. By turning the sleeve-shaped insert, a pre-setting for the amount of liquid to flow through the valve can be set. The entire unit is then fixedly held in the housing by an annular nut, the carrier for the closing element closing off the valve.

Assembly of such a valve is relatively complicated. First of all the closing element has to be combined with its carrier and mounted, and then the carrier with closing element has to be inserted in the sleeve which forms the insert with the valve seat. Finally, the unit thus assembled has to be manipulated in order to be inserted in the valve housing. Such a procedure renders the manufacture of the valve relatively complicated and thus creates relatively high costs.

The invention is based on the problem of simplifying manufacture of the valve.

In a radiator valve of the kind mentioned in the introduction, that problem is solved in that the first housing part, the insert, the closing element and the second housing part form, in that order, a stack, and the housing cover closes an opening in the housing body through which the remaining components of the stack, if appropriate with the exception of the housing cover, are insertable in succession into the housing body.

Manufacture of the valve can thus be dramatically simplified. Virtually no preassembly is necessary. The individual valve components can be inserted in succession through the opening in the housing body. The housing cover then closes that opening. Although it is possible for the cover also to be inserted into the housing body, that is, to extend for a certain distance into the housing body, it would also be suitable for the housing cover to lie merely externally on the housing body. At any rate the said four parts form a stack. Since the individual parts of this stack can be handled independently of one another, they can be built into the valve in succession at different stations of a production line. Since in each assembly step virtually all that is required is insertion, the assembly can be performed rhythmically with virtually identical rhythmic beats. The term "stack" here means that the said parts are arranged in that sequence and form a unit at the latest in the installed state. That unit can, if appropriate, also be pre-assembled. But the individual parts still enter the housing body in succession even when that unit is being installed.

The closing element preferably has a cylindrical portion which projects into a housing bore in the second housing part. The housing part in that case has a guide pin which projects into the closing element. On assembly the parts are therefore aligned with respect to one another in the axial direction. Provided that the orientation is correct, the cylindrical portion automatically drops into the housing bore. The guide pin drops into a corresponding aperture or opening in the closing element. In this way, firstly, the two most important parts of the valve, namely, the closing element and valve seat, are aligned with respect to one another. Moreover, it is also ensured that both parts have the corresponding alignment with respect to the housing, which is especially important when the closing element is operated from the outside by an operating element, for example a thermostatic radiator control.

Between the insert and the closing element there is preferably arranged a spring, which likewise constitutes a component of the stack. The stacked configuration of the radiator valve can still be maintained even when using a spring. In that case the spring has to be installed after the closing element and before the insert (or vice versa). The spring then acts directly between closing element and insert so that no further elements are required.

In that case it is especially preferred for the spring to be arranged in the closing element and for the guide pin to form an abutment for the spring. The bearing surface for the spring is therefore defined on the insert. The guide pin can be used to stabilise the spring.

This is the case in particular when the closing element has radially inwardly directed guide fingers, which leave free a central space for the guide pin. In that case the spring receives a clearly defined position in the closing element, from which it is unable to escape laterally. The guide pin also projects into this opening or this space, so that on assembly the correct positioning of the spring on the guide pin follows automatically.

The insert preferably lies adjacent to a circumferential housing surface, if appropriate with a sealing ring inserted therebetween, which is inclined with respect to the direction of movement of the closing element. This surface is therefore a conically inclined surface. When the insert is inserted into the housing, on the one hand a centring effect is achieved, and on the other hand an improved surface pressure is achieved which leads to an improved seal at the area of contact between insert and housing surface. This therefore ensures that the water or other heating liquid can pass through the valve only when the closing element is lifted away from the valve seat.

The insert is preferably guided in the first housing part in the radial direction. When the housing is closed, this produces a defined position of the insert, whereby the stack as a whole is aligned. Of course, a small freedom of movement is admissible. Larger deviations from the pre-set position are not allowed, however.

In a preferred practical form, provision is made for the housing cover to be screwed into the housing body. This likewise facilitates mounting of the housing cover. On the other hand, the rotary movement of the housing cover as it is screwed in enables the stack to be aligned better in the housing. Relatively small variations which may possibly have arisen during insertion of the valve parts into the housing are then, as it were, neutralised by the rotary movement of the cover.

It is also advantageous for the housing body to be provided with a retaining means for a thermostat top part. The retaining means always has the correct orientation, so that the thermostat top part is then also correctly aligned. On the other hand the housing cover can have any orientation when assembly is finished, without disadvantageous consequences.

The invention is described hereinafter with reference to preferred exemplary embodiments in conjunction with the drawings, in which:
- Fig. 1: shows a first embodiment of a radiator valve and
- Fig. 2: shows a second embodiment of a radiator valve as an angle valve.

A radiator valve 1 comprises a housing, which is formed by a housing body 2 and a housing cover 3. An inlet connection 4 and an outlet connection 5 are provided in the housing body 2. The flow path between the inlet connection 4 and the outlet connection 5 can be interrupted by the co-operation of a sealing zone 7 of a closing element 6 with a valve seat 8.

The valve seat 8 is arranged on an insert 9 constructed separately from the housing body 2 and the housing cover 3. The insert 9 is clamped between the housing body 2 and the housing cover 3. For that purpose a circumferential wall 10, inclined with respect to the centre line 11, that is, with respect to the direction of movement of the closing element 6, is provided in the housing body 2. This wall 10 therefore forms a longitudinal section of a conical envelope. The insert 9 lies adjacent to this wall 10, with a sealing ring 37 between it and the wall.

The insert has several feet 12, in this particular case three, with which it stands on the housing cover 3. The feet 12 leave between them sufficient space for water to penetrate without significant resistance into the inside of the insert 9. The feet 12 can also be used as guide means. The housing cover 3 has a circumferential projection 13 which guides the feet 12 of the insert 9 radially. Even if a certain freedom of movement can be allowed here, this construction enables the insert 9 to be positioned with relatively good accuracy in the valve as the radiator valve 1 is being assembled.

On the insert 9 there are furthermore provided holding arms 16 which extend radially inwards. In this particular case, these holding arms 16 are formed by a continuation of the feet 12 radially inwards and upwards. The holding arms 16 support in the middle a guide pin 17, which thus passes through the valve seat 8. The holding arms 16 are arranged in a star shape, so that an opening sufficiently large for the water to pass through remains between them. The guide pin 17 extends for a predetermined length in the direction of the axis 11.

The closing element 6 is guided on the guide pin 17.

The closing element 6 comprises a head part 18 and a body 19. The sealing zone 7 is arranged on the body 19. For that purpose the body has a circumferential groove 20 into which a sealing ring 21 is inserted. On the side remote from the valve seat 8 the sealing ring 21 is supported by a circumferential wall 22. The sealing ring 21 serves on the one hand, of course, to form a seal. It is also useful, however, for compensating for inaccuracies which occur during manufacture of the different parts.

When the valve is used under relatively high pressures, it can be worthwhile to hold the sealing ring 21 more firmly on the closing element 6. This can be effected, for example, by vulcanising the sealing ring 21 into the closing element or by casting a reinforcing element into the sealing ring. Finally, the wall 22 may also have through-going holes through which corresponding projections of the sealing ring 21 can engage. When the sealing ring 21 is moulded integrally with the closing element 6, the sealing ring 21 can have parts on both sides of the wall 22.

The head part 18 projects with a cylindrical portion 23 into a housing bore 24. A tappet 25 which is guided through a stuffing box 26 also projects into this housing bore 24. The closing element 6 lies with its cylindrical portion 23 or, more accurately, with a recess 27 in the end face thereof, adjacent to the tappet 25. In operation the tappet is adjusted in known manner not explained in more detail by a radiator thermostat top part or other operating element.

The cylindrical portion 23 has a smaller diameter than the housing bore 24. Beyond the housing bore 24 the head part 18 widens conically, however. The cone 28 thus formed then has a larger diameter than the housing bore 24. It (the cone) joins the head part 18 to the body 19, so that the entire closing element 6 is in the form of a cone 28 or a cone with a cylindrical extension 23 at the top, and a circumferential edge, which forms the body 19, at the bottom.

The housing bore 24 widens to an opening 29, the transition being formed by a conical envelope 30. On the outside of the cone 28, distributed in the circumferential direction, there are several projections 31, the outer wall of which runs parallel to the outer wall of the opening 29, that is, parallel to the axis 11. As the closing element 6 moves parallel to the axis 11, these projections 31 together with the wall of the opening 29 provide a certain guidance, which above all facilitates assembly. The closing element 6 can be mounted generally centrally in the opening 29 without additional measures. The projections 31 have on their top side a bevel 36, which fits into the space bounded by the conical envelope 30. Thus, on the one hand, a relatively large area of contact between the projections 31 and the wall of the cone 28 is ensured, and, on the other hand, the movement of the closing element 6 parallel to the axis 11 is not appreciably restricted by these projections.

Inside the cone 28, several plate-like guide fingers 32 are provided, which extend radially inwards and leave free a space 33 in which the guide pin 17 is arranged. The guide fingers 32 therefore support the closing element 6 radially on the guide finger 17 and thus allow only movement in the axial direction and, theoretically, a rotational movement of the closing element with respect to the valve seat 8.

In the opening 33 there is also arranged a compression spring 34, which is compressed between the guide pin 17 and the closing element 6 or, more accurately, a bearing surface 35 formed thereon. For improved centring of the compression spring 34 on the guide pin 17, this can also be provided in a manner not shown with an axial guide projection, which projects into the compression spring 34 and the outer diameter of which corresponds to the internal diameter of the compression spring 34.

The insert 9 and the closing element 6 can be manufactured as injection moulded parts from plastics material. The plastics material can in that case be selected so that it is softer than the material of the housing body 2 or of the housing cover 3, yet nevertheless has the necessary rigidity and dimensional stability. The actual sealing function in the closing zone 7 is then ensured by the inserted sealing ring 21.

Such a valve can be made very simply and with few steps.

The closing element 6, the spring 34 and the insert 9 merely have to be inserted in succession into the housing body 2. The housing cover 3 can then be screwed on with a seal 14, for example, an O-ring, interposed. As a preliminary measure it is merely necessary to provide the closing element 6 with the sealing ring 21 and to provide the insert 9 with the sealing ring 37. Otherwise, centring of the parts is automatic by virtue of the fact that the closing element projects with its cylindrical portion 23 into the housing bore 24. The spring 34 is received in the opening 33 between the guide fingers 32. The guide pin 17 of the insert 9, which insert at the same time is centred at the wall 10, then also projects into this opening 33. A final positioning is provided by screwing in the housing cover 3. Finally, the stuffing box 26 can be screwed in, and the radiator valve 1 is finished.

This construction moreover has further advantages. When the stuffing box 26 is unscrewed once the valve has been installed, the compression spring 34 presses the closing element 6 away from the valve seat 8, namely, until the cone 28 comes to bear on the inner axial edge of the housing bore 24. An edge 38 is formed there, which forms a good seal with the wall of the cone 28. If desired, this edge 38 can dig into the material of the cone 28 slightly. Additional seals are not necessary here, which on the one hand simplifies construction and on the other hand increases operational reliability.

Furthermore, it is of great advantage that the closing element 6 can now be better aligned and centred on the valve seat 8. The closing element is, in fact, held exactly where the forces of the through-flowing liquid acting on the closing element 6 act. In the case of conventional valves, the closing element is held at a certain distance from the valve seat, so that here moments were able to act on the closing element, which under unfavourable circumstances could lead to a tendency to oscillate and thus to noise of the valve. The improved mounting option therefore enables an improved operational behaviour to be achieved at the same time. Guidance is further assisted by the projections 31 co-operating with the opening 29. During assembly and also in operation this relatively simple measure enables the closing element 6 to remain with its sealing ring 21 virtually always parallel to the valve seat 8.

In the region of the stuffing box 26, a retaining means for an operating element, for example, a thermostat top part (not illustrated), is provided on the outside of the housing body 2. Since during assembly the housing cover 3 is rotated, the retaining means keeps its pre-set alignment so that the operating element can always be mounted in the correct orientation. This advantageous effect can easily be realised by assembling the valve "from below".

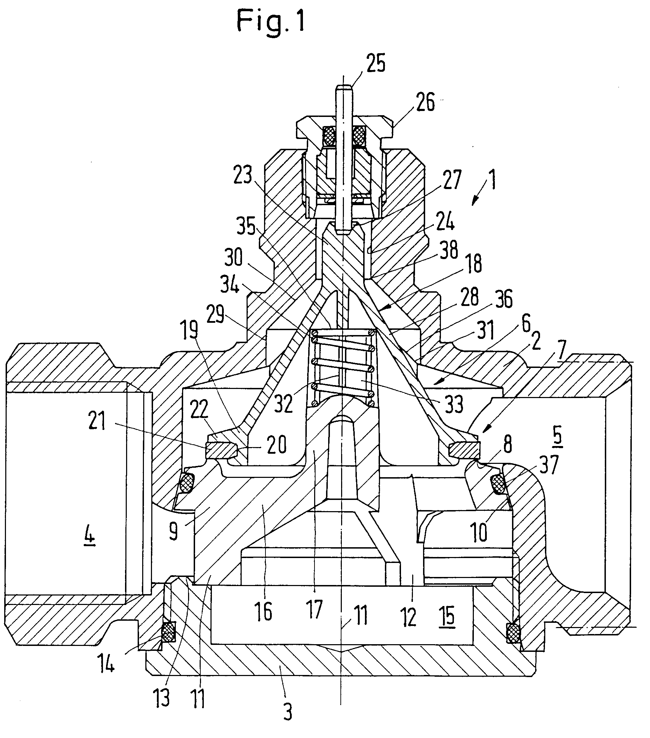

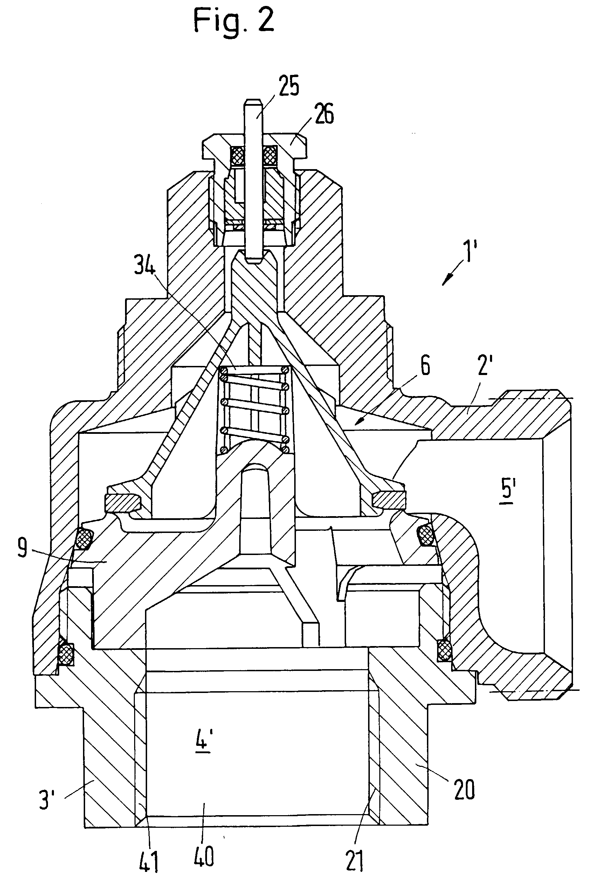

Fig. 2 shows a modified form of a radiator valve 1', the "internal workings" of which are of the same construction as in the embodiment according to Fig. 1. In order to explain the simple construction, only the main parts have been provided with reference numbers, that is, the closing element 6, the spring 34 and the insert 9.

In the present case the form of the housing body 2' and of the housing cover 3' has changed. The radiator valve 1' shown in Fig. 2 is in the form of an angle valve, that is, the inlet connection 4 and the outlet connection no longer lie on a line, as in the embodiment shown in Fig. 1. On the contrary, the inlet connection 4' and the outlet connection 5' lie at an angle of 90° to one another.

To accomplish this by simple means, in the housing cover there is provided a bore 40 which has an internal thread 41. The corresponding heating liquid inlet can thus be attached here. Apart from an internal thread 21, other connection options are also feasible, of course.

Apart from the inlet and outlet connections 4, 4', 5, 5', both housing bodies 2, 2' have merely cylindrical or conical chambers, the diameter of which enlarges outwards. These openings or bores can therefore be made using relatively simple tools.

The housing cover 3' shown in Fig. 2 could also be used in the case of a valve 1 according to Fig. 1. The valve would then be a three-way valve.

## Claims

1. Radiator valve having a housing, which comprises two housing parts, namely, a housing body and a housing cover, a closing element, and a valve seat which co-operates with the closing element and is formed in an insert arranged in the housing, characterised in that the first housing part (3), the insert (9), the closing element (6) and the second housing part (2) form, in that order, a stack, and the housing cover (3) closes an opening in the housing body (2) through which the remaining components of the stack are insertable in succession into the housing body (2).

2. Valve according to claim 1, characterised in that the closing element (6) has a cylindrical portion (23) which projects into a housing bore (24) in the second housing part (2) and the insert part (9) has a guide pin (17) which projects into the closing element (6).

3. Valve according to claim 1 or 2, characterised in that between the insert (9) and the closing element (6) there is arranged a spring (34), which likewise constitutes a component of the stack.

4. Valve according to claim 3, characterised in that the spring (34) is arranged in the closing element (6) and the guide pin (17) forms an abutment for the spring (34).

5. Valve according to any one of claims 2 to 4, characterised in that the closing element (6) has radially inwardly directed guide fingers (32), which leave free a central space (33) for the guide pin (17).

6. Valve according to any one of claims 1 to 5, characterised in that the insert (9) lies adjacent to a circumferential housing surface (10), if appropriate with a sealing ring (37) inserted therebetween, which is inclined with respect to the direction of movement of the closing element (6).

7. Valve according to any one of claims 1 to 6, characterised in that the insert is guided in the first housing part (3) in a radial direction.

8. Valve according to any one of claims 1 to 7, characterised in that the housing cover (3) is screwed into the housing body (2).

9. Valve according to any one of claims 1 to 8, characterised in that the housing body (2) is provided with a retaining means for a thermostat top part.
